# EUROPEAN PATENT SPECIFICATION

(11) **EP 3 636 513 B1**
(45) Date of publication and mention of the grant of the patent: **01.11.2023**
(21) Application number: 18868901.2
(22) Date of filing: 08.05.2018
(51) Int. Cl.: B61L 27/30, G06F 21/64, G06F 21/60, B61L 27/37, B61L 27/50, B61L 27/60, B61L 27/20

(54) **CONTROL METHOD AND TRAIN CONTROL SYSTEM**
STEUERUNGSVERFAHREN UND ZUGSTEUERUNGSSYSTEM
PROCÉDÉ DE COMMANDE ET SYSTÈME DE COMMANDE DE TRAIN

(30) Priority: 20.10.2017 CN 201710984052
(43) Date of publication of application: 15.04.2020
(73) Proprietor: CRSC RESEARCH & DESIGN INSTITUTE GROUP CO., LTD., Fengtai District Beijing 100070 (CN)
(72) Inventor: LIU, Muqi, Beijing 100070 (CN); ZHOU, Xingtao, Beijing 100070 (CN); JIANG, Ming, Beijing 100070 (CN); YANG, Tao, Beijing 100070 (CN); GENG, Peng, Beijing 100070 (CN); MA, Jiangfan, Beijing 100070 (CN); ZHENG, Yichuan, Beijing 100070 (CN); ZHANG, Xinze, Beijing 100070 (CN)
(74) Representative: Liesegang, Eva
(86) International application number: PCT/CN2018/085943
(87) International publication number: WO 2019/076030

(56) References cited:
- EP-A1- 2 489 570
- EP-A1- 2 927 088
- EP-A2- 1 875 342
- WO-A1-2015/160603
- CN-A- 101 722 971
- CN-A- 107 985 348
- CN-U- 203 084 710
- DE-A1-102007 041 177
- MARTIN EGGENHOFER: "Effiziente Datenpr?fung streckenseitiger ETCS-Systeme - Efficient data assessment for trackside ETCS systems", SIGNAL UND DRAHT: SIGNALLING & DATACOMMUNICATION, vol. 109, no. 9, 11 September 2017 (2017-09-11), pages 40-44, XP055410903, DE ISSN: 0037-4997
- JOACHIM BLEIDIESSEL ET AL: "Metamodell basierte Projektierung von Eisenbahninfrastrukturen mit AMBER", SIGNAL UND DRAHT: SIGNALLING & DATACOMMUNICATION, EURAILPRESS, DE, vol. 106, no. 6, 1 June 2014 (2014-06-01), pages 35-40, XP001589477, ISSN: 0037-4997

## Description

### TECHNICAL FIELD

The present disclosure relates to a control method and a train control system, especially to a control method and a train control system capable of separating configuration data from application software.

### BACKGROUND

Generally, in the train control system, RBC (Radio Block Center) configuration data and application software both belong to the internal module of the host software. When the configuration data such as train line data changes, the software needs to be recompiled, so as to achieve the purpose of data alter. Since the configuration data is likely to change as the situation changes, each time the configuration data changes, the software needs to be recompiled, which not only increases the workload, but also causes bad readability to the system-related data configuration.

EP 1 875 342 A2 discloses a method of preparing and checking software to be executed in a railway signaling network..EP 2 489 570 A1 discloses a method of coding a dataset corresponding to a data telegram sent out from the train influencing component by a central unit for the transmission of train influencing component into a data set transmitted to a data transmission component. MARTIN EGGENHOFER, "Effiziente Datenprüfung streckenseitiger ETCS-Systeme - Efficient data assessment for trackside ETCS systems", SIGNAL UND DRAHT: SIGNALLING & DATACOMMUNICATION, DE, (20170911), vol. 109, no. 9, ISSN 0037-4997 relates to the interoperability of railroad tracks using the European Train Control System.

### SUMMARY

The present disclosure aims to provide a control method and a train control system that substantially obviate one or more problems due to the limitations and disadvantages of the prior art. Specifically, the invention provides a method according to claim 1 and a system according to claim 8. Embodiments are defined in the dependent claims.

According to the invention, there is provided a control method applied to a train control system, the control method comprising: a first data reading step of reading first data encrypted by a predetermined encryption algorithm; a second data generating step of generating second data according to the first data and a predetermined decryption algorithm, the second data including at least one data variable; a data verifying and operating step of performing a predetermined verification on the second data and performing a predetermined operation according to a verification result; and a variable judging and processing step of judging whether a predetermined variable of the at least one data variable satisfies a first predetermined condition, and performing predetermined processing according to a judgment result. The first data is a combination of a visual data file and a non-visual data file, wherein unchangeable configuration data is set as a non-visual data file, and changeable configuration data is set as a visual data file; and wherein: a specific display tool is to be used to display the non-visual data file; and the train control system selectively sets a display tool according to needs of a security level to not provide the specific display tool when the train control system has a high confidentiality requirement level and the configuration data is highly stable, and to provide the specific display tool when the train control system has a low confidentiality requirement level or the configuration data needs to be changed frequently.

According to the invention, there is provided a train control system, wherein the train control system comprises: a data reading unit capable of reading first data encrypted by a predetermined encryption algorithm; a data generating unit capable of generating second data according to the first data and a predetermined decryption algorithm, the second data including at least one data variable; a data verifying and operating unit capable of performing a predetermined verification on the second data and performing a predetermined operation according to a verification result; and a variable judging and processing unit is capable of judging whether a predetermined variable of the at least one data variable satisfies a first predetermined condition, and performing predetermined processing according to a judgment result. The first data is a combination of a visual data file and a non-visual data file, wherein unchangeable configuration data is set as a non-visual data file, and changeable configuration data is set as a visual data file; and wherein: a specific display tool is to be used to display the non-visual data file; and the train control system selectively sets a display tool according to needs of a security level to not provide the specific display tool when the train control system has a high confidentiality requirement level and the configuration data is highly stable, and to provide the specific display tool when the train control system has a low confidentiality requirement level or the configuration data needs to be changed frequently.

It can be seen that the control method according to the present disclosure not only can separate the configuration data from the software logic of the train operation control system, so that the modification of the configuration data does not involve the change and recompilation of the software logic, and but also can ensure the security of the configuration data. In addition, generation of the first data and the second data is performed by a specific tool, which is fast, simple, and reliable. The first data source is a visual file, which enhances readability of the data, and is convenient for the maintenance personnel to quickly check data configuration problems.

It should be understood that the foregoing general description and the following detailed description are exemplary and illustrative only, and are intended to provide further explanation of the technique that is claimed.

### BRIEF DESCRIPTION OF THE DRAWINGS

The above and other objectives, features and advantages of the present disclosure will become more apparent through the more detailed description of the embodiments of the present disclosure in combination with the drawings. The drawings are intended to provide a further understanding of the embodiments of the present disclosure, and they constitute a portion of the specification, they are intended to explain the present disclosure together with the embodiments of the present disclosure, and do not constitute limitations to the present disclosure. The drawings are not to be construed as drawn to scale unless otherwise indicated. In the drawings, the same reference sigs generally represent the same components or steps. In the drawings:
FIG. 1 is a flow chart showing a control method 100 according to the present disclosure; and
FIG. 2 is a configuration diagram showing composition of the train control system 10 according to the present disclosure.

### DETAILED DESCRIPTION OF THE EMBODIMENTS

In order to make the objectives, the technical solutions and the advantages of the present disclosure more apparent, the exemplary embodiments according to the present disclosure will be described in detail below with reference to the accompanying drawings. Obviously, these described embodiments are only a part of the embodiments of the present disclosure, rather than all the embodiments of the present disclosure, it should be understood that the present disclosure are not limited to these embodiments described herein in the present disclosure. The scope of the invention is defined by the appended claims. In the present specification and the drawings, the same reference signs will indicate substantially the same elements and functions, and repetitive description of these elements and functions will be omitted. In addition, description of functions and configurations well known in the art may be omitted for clarity and conciseness.

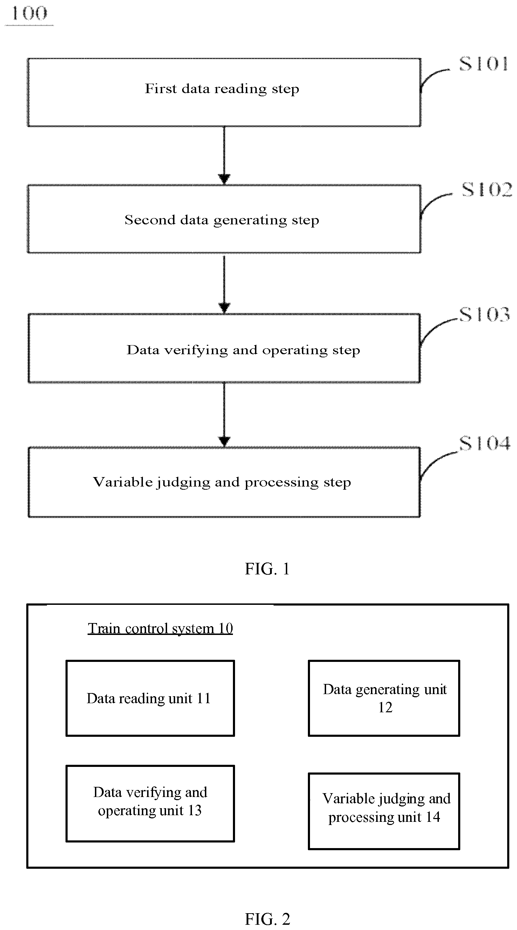

First, the control method 100 of the present disclosure will be described with reference to FIG. 1. FIG. 1 is a flow chart showing a control method 100 according to the present disclosure. The control method 100 can be applied to a train control system. The train control system may be a single type of train system, such as a subway system, an intercity railway system, a high-speed rail system, a general train system, and the like. The train control system may also be a hybrid train system, such as a system in which high-speed train is combined with normal train. Those skilled in the art can apply the control method of the present disclosure to different train control systems based on understanding the principles of the present disclosure.

In this embodiment, the control method 100 comprises the steps provided below.

A first data reading step S101. In this step, first data encrypted by a predetermined encryption algorithm is read.

In particular, the encryption algorithm may be a symmetric encryption algorithm such as SM4, i.e., encryption is implemented by a block nonlinear iterative function. Correspondingly, the decryption algorithm employed in the following step S102 may be a block symmetric decryption algorithm such as SM4. The encryption algorithm may also be an asymmetric encryption algorithm such as RSA. Although an example of the encryption algorithm is shown above, the present disclosure is not limited thereto, those skilled in the art may also adopt other types of vehicle-ground key encryption algorithms applied in the train control system, encryption algorithms that have not been applied to the existing train control system but have application prospects or application feasibility can also be applied, as long as the encryption and decryption principles of the present disclosure can be implemented.

The first data is external data corresponding to Radio Block Center (RBC) configuration data of the train control system. The correspondence between the external data and the RBC configuration data is established based on the encryption and decryption algorithms described above, that is, the first data is generated from the RBC configuration data via the encryption algorithm described above, RBC configuration data is generated from the first data via the decryption algorithm described above.

For the convenience of understanding and explanation in the below, the RBC configuration data is briefly described herein. The RBC configuration data referred to herein is a general term for various types of configuration data used by the Radio Block Center in the train control system to implement train control such as signals and interlocks. Specifically, the RBC configuration data may include line data (e.g., slope data, balise track section data, etc.) within the RBC jurisdiction, time data (e.g., communication timeout time configuration data with neighboring RBC, vehicle-ground communication timeout time configuration data, etc.), interface data (such as IP and port data, etc.), and transportation condition data (such as train interval data, interlocking route state data, etc.). The RBC configuration data can be represented as a data topology diagram or a data map graph of each section within the RBC jurisdiction. According to the configuration data, the RBC can realize operations such as positioning, signal control, interlocking, etc. on the train running in the section within the jurisdiction.

The RBC configuration data (i.e., the second data below) described herein is a general term for configuration data related to the RBC control center. Similarly, the first data described herein is a general term for the encrypted data corresponding to the RBC configuration data.

In practice, the RBC configuration data may need to be altered for a variety of reasons. For example, with continuous spread-out of railway lines, it is often the case that newly-built railway lines merge into existing railway lines (e.g., the Panying Passenger Dedicated Line meets the Shenda High-speed Passenger Line at Yingkou East Station), so it needs to modify the number and location of balise in existing railway lines, resulting in changes to the RBC configuration data for this section. Another example, some RBC configuration data of the high-speed rail line during the experimental phase or the no-load trial operation phase may not be suitable for the passenger operation, so these configuration data needs to be changed during the passenger operation. Weather can also be the cause of configuration data alter. For example, in the cold regions of northeastern China, severe cold and frozen soil layers will cause certain potential hazards to high-speed rail operations, different modes of operation are required for summer and winter in these areas of high-speed rail lines, thus RBC configuration data needs to be adjusted to match different operation mode. Although the reason for alter of the RBC configuration data is showed above exemplarily, the present disclosure is not limited thereto, those skilled in the art may make reference to the principles of the present disclosure in other cases where change occurs to the RBC configuration data.

The first data is a combination of a visual data file file, such as an excel file, an xml file, or the like, and a non-visual data. Setting the first data as a visual data file is advantageous for improving readability of the data, and is convenient for the maintenance personnel of the train control system to quickly check the problems in data configuration, in particular, when a problem in the second data is checked in step S103 (described later) and when it is determined in step S104 (described later) that one or some of the data variables of the second data do not satisfy the first predetermined condition, the maintenance personnel can timely check the problem and modify the first data.

It should be noted that the term "non-visual data file" as used herein does not mean that the first data is completely undisplayable, but means that a specific display tool (such as a specific software application) needs to be used to display the first data. The train control system can selectively set the display tool according to needs of a security level. According to the invention, no display tool is provided when the train control system has a high confidentiality requirement level and the configuration data is highly stable (i.e., the configuration data generally does not change); and the display tool is provided when the train control system has a low confidentiality requirement level or the configuration data needs to be changed frequently.

According to the invention, unchangeable configuration data is set (such as the minimum interval distance between front and rear trains) as a non-visual data file, and the changeable configuration data is set (such as section balise position data) as a visual data file. In this way, protection against unchangeable configuration data can be enhanced on the one hand, and configuration data can be changed in time when a problem occurs to the changeable configuration data on the other hand.

The first data may be stored in a storage unit of the train control system, or may be stored in a storage unit outside the train control system, that is, a data source of the first data may be the train control system itself, may also be a data source external to the train control system.

Next, the process proceeds to step S102.

In the second data generating step S102, second data is generated according to the first data and a predetermined decryption algorithm, the second data includes at least one data variable.

The predetermined decryption algorithm may be a decryption algorithm corresponding to the encryption algorithm described above. Specifically, as described above, the predetermined decryption algorithm may be an SM4 decryption algorithm or an RSA decryption algorithm. Although the predetermined decryption algorithm is shown above exemplarily, the present disclosure is not limited thereto, those skilled in the art can select an appropriate decryption algorithm as needed, as long as the encryption and decryption principles of the present disclosure can be implemented.

The second data is the RBC configuration data described above, such as line data, time data, and the like. The second data includes at least one data variable. In practice, the RBC control center usually needs large-scale configuration data to realize the operation control over the train, for example, the train operation line is monitored in real time through the line data, the vehicle-ground communication time is adjusted through the time data, and safety interval distance between front and rear trains is ensured through the transportation condition data, and so on. Therefore, the second data should contain one or more data variables, wherein each data variable corresponds to one function or parameter in the RBC control center operating system, and reading and computing of the configuration data can be realized by that the operating system reads each data variable in the second data and assigns a value to the function or parameter, and the corresponding computation result is generated to control the operation of the train. Hereinafter, "the second data" has the same meaning as "RBC configuration data" and "configuration data", unless otherwise specified.

For example, the second data may contain two data variables: a front-rear train minimum interval distance variable and a signal light position variable. The train control system can control the distance between two trains that are front and rear by reading the two data variables to ensure that it is greater than or equal to the front-rear train minimum interval distance.

As another example, the second data may include three data variables: a balise position variable, a vehicle-ground communication timeout time configuration variable, and an interlock route state variable. By reading these three data variables, the train control system can monitor the position of the running train on the one hand, and adjust a vehicle-ground communication timeout threshold in time when the running train is in a specific geographical area (e.g., in a remote mountainous area, resulting in poor communication signals) on the other than, to ensure stable operation of the train and to achieve an interlocking route when conditions are satisfied.

Although the case of the data variable included in the second data is illustrated above exemplarily, the present disclosure is not limited thereto. Those skilled in the art can selectively set the type and number of the data variable in the second data according to actual needs of the train control system, as long as the principles of the present disclosure can be implemented.

The second data is a combination of visual data and non-visual data, that is, the second data, in part, is not visible to the external maintenance personnel. This prevents configuration data from being changed due to mistake operation by the external maintenance personnel.

For example, the second data described above includes two data variables, that is, a front-rear train minimum interval distance variable and a signal light position variable. On the one hand, the front-rear train minimum interval distance variable can be set as non-visual data to prevent from being modified by the maintenance personnel, because a reduction of the front-rear train the minimum interval distance may cause a train collision risk; on the other hand, the signal position variable may be set as visual data, so that after the train line is modified, the maintenance personnel can find and adjust the position of the signal light in time.

Next, the process proceeds to step S103.

In the verifying and operating step S103, a predetermined verification is performed on the second data and a predetermined operation is performed according to a verification result.

Since the first data mentioned above is from an external data source, the second data generated from the first data cannot be directly applied to the train control due to a consideration of safety of the train control, but the second data is subjected to a predetermined verification, and if the second data passes the predetermined verification, it can be applied to train control.

In step S103, the predetermined operation differs according to a different result of the predetermined verification. For example, if the second data does not pass the predetermined verification, the predetermined operation may be an error report operation, that is, the train control system reports a configuration data error to the maintenance personnel in a predetermined manner, and waits for the maintenance personnel's further processing.

If the second data does not pass the predetermined verification, the predetermined operation may also be a safe state initiating operation, that is, the train control system initiates a safe state operation to ensure safe operation of the train. For example, in a case where the second data includes a front-rear train minimum interval distance variable, if the front-rear train minimum interval distance variable does not pass the predetermined verification described above in step S103 (e.g., the front-rear train minimum interval distance variable is too short), the train control system can adjust the front-rear train minimum interval distance variable in time (e.g., appropriately increasing the front-rear train minimum interval distance variable in the second data) to prevent collision during train operation.

Although content of the predetermined operation performed when the second data does not pass the predetermined verification is shown above exemplarily, the present disclosure is not limited thereto, those skilled in the art may selectively set the predetermined operation according to actual needs. For example, in a case where the second data described above includes the front-rear train minimum interval distance variable, the train operation control system may initiate a safe state operation on the one hand, that is, appropriately increasing the front-rear train minimum interval distance variable, and may also report a configuration data error to the maintenance personnel and wait for further processing by the maintenance personnel on the other hand.

If the second data successfully passes the predetermined verification, the predetermined operation may be assigning a value to the computation function or parameter of the RBC control center according to the second data, and further control the train. In this case, the predetermined operation may also include a reporting operation to the maintenance personnel, such as reporting that configuration data has been updated, configuration data has been applied, and the like.

Further, the predetermined verification comprises one or more of: validity verification, integrity verification, and cross-comparison verification.

The validity verification may comprise determining whether the at least one data variable satisfies a second predetermined condition. In particular, the second predetermined condition differs depending on the type of the data variable to be verified.

For example, if the data variable to be verified is a fastest travel speed variable, the second predetermined condition may be a travel speed range. For example, the second predetermined condition is that the fastest travel speed of the train is less than or equal to 400 km/hour. If the fastest travel speed variable in the second data is 350 km/hour, the fastest travel speed variable satisfies the second predetermined condition, so the second data can pass the predetermined verification. On the other hand, if the fastest travel speed variable in the second data is 450 km/hour, the fastest travel speed variable does not satisfy the second predetermined condition, thus the second data cannot pass the predetermined verification.

As another example, if the data variable to be verified is a vehicle-ground communication port configuration variable, the second predetermined condition may be a port number. For example, the second predetermined condition is a 16-digit port number that can identify the communication address and the communication protocol. If the vehicle-ground communication port configuration variable in the second data does not match the 16-digit port number, the vehicle-ground communication port configuration variable does not satisfy the second predetermined condition, thus the second data does not pass the predetermined verification.

Although two examples of the validity verification are shown above exemplarily, the present disclosure is not limited thereto. The purpose of the validity verification is to ensure that the second data is valid, which is one of the prerequisites for ensuring that the generated configuration data can be applied and deployed by the train control system.

The integrity verification may include verifying integrity of the second data through a CRC check, a parity check, an MD5 check, or an LRC check.

Specifically, taking the CRC check method as an example, a CRC check code may be added at the end of the generated data frame of the second data (e.g., adding a check code in the last 8 bits of the data frame) to generate a new data frame. The added check code enables the newly generated data frame to be divisible by a specific number selected by a transmission end and a receipt end in common. The train control system divides the data frame by a selected divisor after receiving the new data frame. If there is a remainder, it indicates that the frame has an error during transmission.

Although the CRC check method is shown above exemplarily, the present disclosure is not limited thereto, those skilled in the art may also use other check methods known in the art to verify integrity of the second data, as long as the principles of the present disclosure can be implemented. Through the integrity verification described above, it is advantageous to improve integrity of the second data transmission on the one hand, and when the transmission has an error, it can be found in time on the other hand, which is beneficial to ensure the safety of train operation.

The integrity verification may further include type integrity verification of the data variable of the second data, that is, verifying that the type of the at least one data variable is complete. For example, in order to ensure safe operation of the train, the configuration data should include at least three types of data variables: namely, the front-rear train minimum interval distance variable, the signal light position variable, and the vehicle-ground communication overtime time configuration variable. If the second data contains only one or two of the three types of data variables, the second data does not pass the integrity verification. Therefore, the integrity verification also facilitates in entirety the assurance of various types of data variables required by the train control system, thereby ensuring safe operation of the train.

The train operation control system comprises a first computation subsystem and a second computation subsystem, the first computation subsystem and the second computation subsystem perform computation according to the at least one data variable respectively, wherein the cross-comparison verification comprises: judging whether computation results of the first computation subsystem and the second operation computation are consistent.

Specifically, the first computation subsystem and the second computation subsystem may be two computation units in the train control system, respectively. After the train control system reads the second data, it assigns a value to the first computation subsystem and the second computation subsystem respectively, and the two subsystems respectively perform computation, if the computation results of the two are consistent, the result of the computation is outputted. Therefore, by setting the first computation subsystem and the second computation subsystem, it facilitates improving stability and accuracy of the system, thereby ensuring safe operation of the train.

For example, if the second data includes the front-rear train minimum interval distance variable and the track slope variable, the first computation subsystem and the second computation subsystem may respectively compute the fastest speed of the train on the track, if the fastest speeds computed by the two subsystems are consistent, the computed fastest speed will be outputted to control the running of the train.

Although the example of cross-comparison verification is shown above exemplarily, the present disclosure is not limited thereto, in practice, those skilled in the art may selectively set the scheme of cross-comparison verification as needed, as long as the principles of the present disclosure can be implemented.

Although the example of the predetermined verification is shown above exemplarily, the present disclosure is not limited thereto, those skilled in the art may selectively set the content of the predetermined verification according to actual needs, as long as the principles of the present disclosure can be implemented.

It should be noted that although validity verification, integrity verification, and cross-comparison verification are described above in order, this does not mean that the three verification schemes are to be executed in this order in practice, that is, if the predetermined verification adopts three verification schemes of validity verification, integrity verification and cross-comparison verification, priority order of the three verification schemes may be adjusted according to actual needs. For example, integrity of the configuration data can be verified first, on the basis of satisfying integrity of the confirmation data, then validity of the configuration data is verified, and on the basis of satisfying validity of the configuration data, the cross-comparison verification is performed.

It should be noted that the predetermined verification of the second data in step S103 should be understood as verification of the at least one data variable in the second data. In practice, in order to improve deployment efficiency of the configuration data, the predetermined verification in step S103 may also adopt a verification manner in which multiple verification schemes are parallel. With the second data described above contains two data variables, that is, the front-rear train minimum separation distance variable and the traffic light position variable, as an example, integrity of the two data variables can be verified first, on the basis of that integrity of the two data variables is satisfied, then their validity is verified, it is also possible to first verify integrity and validity of one data variable (such as the front-rear train minimum interval distance variable), and on the basis of that integrity and validity are satisfied, then integrity and validity of another data variable (e.g. traffic light position variable) are verified.

Next, the process proceeds to step S104.

In the variable judging and processing step S104, it is judged whether a predetermined variable of the at least one data variable satisfies a first predetermined condition, and predetermined processing is performed according to a judgment result.

Even after the above-described step S103, in some specific cases, the second data cannot be directly applied and deployed. For example, in the at least one data variable of the second data, a certain one (or some) data variable is constant, and change in the configuration data caused by change in the data variable may cause a sudden increase in potential safety risk of the train operation, thus the train control system should perform special inspection and judgment on such data variable.

For example, to prevent collisions of high-speed trains, the minimum interval distance of the front and rear trains is constant, which corresponds to the safe distance that the train brakes to a stable position under the most unfavorable conditions. Therefore, the data variable should generally not be changed. It is assumed that in the train control system, the front-rear train minimum interval distance should be 5000 meters, so the first predetermined condition is that the front-rear train minimum interval distance variable in the second data is greater than or equal to 5000 meters. If the front-rear train minimum interval distance variable in the second data is 3000 meters, the first predetermined condition cannot be satisfied.

Although the first predetermined condition is shown above exemplarily, the present disclosure is not limited thereto, the first predetermined condition may be different according to the type of the data variable judged in step S104. Those skilled in the art may select the first predetermined condition according to actual needs, as long as the principles of step S104 can be implemented.

The predetermined processing may be the predetermined operation as described above in step S103. For example, as described above, if the front-rear train minimum interval distance variable in the second data is less than 5000 meters, the predetermined processing may be a system error report, that is, the train control system reports a configuration data error to the maintenance personnel in a predetermined manner and waits for further processing by the maintenance personnel. The predetermined operation may also be activating a safety state operation, that is, the train control system initiates a safe state operation to ensure safe operation of the train. For example, the train control system may adjust the front-rear train minimum interval distance variable in time (e.g., appropriately increasing the front-rear train minimum interval distance variable in the second data) to prevent collision when trains are running.

If the predetermined variable satisfies the first predetermined condition, the predetermined processing may be value-assigning the predetermined variable to a function or parameter of the RBC control center to control the operation of the train.

Further, in step S104, the judging is performed at a predetermined period.

Specifically, in step S104, it is judged whether the predetermined variable in the at least one data variable satisfies the first predetermined condition at a predetermined period, and predetermined processing is performed according to a judgment result.

The predetermined period may be an artificially preset clock cycle, or may be a period calculated by the train control system according to the actual running condition of the train. Those skilled in the art may select the predetermined period according to actual needs, as long as the principles of the present disclosure can be implemented.

Although the example of the predetermined processing is shown above exemplarily, the present disclosure is not limited thereto, those skilled in the art may select the predetermined processing according to the actual situation of the train control system, as long as the principles of step S104 can be implemented.

The control method 100 described above not only can separate the configuration data from the software logic of the train control system, so that the modification of the configuration data does not involve the change and recompilation of the software logic, but also can ensure the security of the configuration data. In addition, generation of the first data and the second data is performed by a specific tool, which is fast, simple, and reliable. The first data source is a visual file, which enhances readability of the data, and is convenient for the maintenance personnel to quickly check data configuration problems.

The train operation control system 10 of the present disclosure will be described in detail below with reference to FIG. 2. FIG. 2 is a configuration diagram showing composition of the train operation control system 10 according to the present disclosure.

As shown in FIG. 2, the train control system 10 comprises a data reading unit 11, a data generating unit 12, a data verifying and operating unit 13, and a variable judging and processing unit 14. Each unit in the train control system 10 will be described in detail below.

The data reading unit 11 is capable of reading first data encrypted by a predetermined encryption algorithm.

In particular, the encryption algorithm may be a symmetric encryption algorithm such as SM4, i.e., encryption is implemented by a block nonlinear iterative function. Correspondingly, the decryption algorithm adopted by the data generating unit 12 may be a block symmetric decryption algorithm such as SM4. The encryption algorithm may also be an asymmetric encryption algorithm such as RSA. Although an example of the encryption algorithm is shown above, the present disclosure is not limited thereto, those skilled in the art may also adopt other types of vehicle-ground key encryption algorithms applied in the train control system, encryption algorithms that have not been applied to the existing train control system but have application prospects or application feasibility can also be applied, as long as the encryption and decryption principles of the present disclosure can be implemented.

The first data is external data corresponding to Radio Block Center (RBC) configuration data of the train control system. The correspondence between the external data and the RBC configuration data is established based on the encryption and decryption algorithms described above, that is, the first data is generated from the RBC configuration data via the encryption algorithm described above, RBC configuration data is generated from the first data via the decryption algorithm described above. The configuration data described herein is the same as the configuration data described above with reference to the control method 100, and details are not repeated herein.

The RBC configuration data (i.e., the second data below) described herein is a general term for configuration data related to the RBC control center. Similarly, the first data described herein is a general term for the encrypted data corresponding to the RBC configuration data.

In practice, the RBC configuration data may need to be altered for a variety of reasons. For example, with continuous spread-out of railway lines, it is often the case that newly-built railway lines merge into existing railway lines (e.g., the Panying Passenger Dedicated Line meets the Shenda High-speed Passenger Line at Yingkou East Station), so it needs to modify the number and location of balise in existing railway lines, resulting in changes to the RBC configuration data for this section. Another example, some RBC configuration data of the high-speed rail line during the experimental phase or the no-load trial operation phase may not be suitable for the passenger operation, so these configuration data needs to be changed during the passenger operation. Weather can also be the cause of configuration data alter. For example, in the cold regions of northeastern China, severe cold and frozen soil layers will cause certain potential hazards to high-speed rail operations, different modes of operation are required for summer and winter in these areas of high-speed rail lines, thus RBC configuration data needs to be adjusted to match different operation mode. Although the reason for alter of the RBC configuration data is showed above exemplarily, the present disclosure is not limited thereto, those skilled in the art may make reference to the principles of the present disclosure in other cases where change occurs to the RBC configuration data.

The first data is a combination of a visual data file, such as an excel file, an xml file, or the like, and a non-visual data file. Setting the first data as a visual data file is advantageous for improving readability of the data, and is convenient for the maintenance personnel of the train control system to quickly check the problems in data configuration, in particular, when a problem in the second data is checked by the data verifying and operating unit 13 (described later) and when it is determined by the variable judging and processing unit 14 (described later) that one or some of the data variables of the second data do not satisfy the first predetermined condition, the maintenance personnel can timely check the problem and modify the first data.

It should be noted that the term "non-visual data file" as used herein does not mean that the first data is completely undisplayable, but means that a specific display tool (such as a specific software application) needs to be used to display the first data. The train control system can selectively set the display tool according to needs of a security level. According to the invention, no display tool is provided when the train control system has a high confidentiality requirement level and the configuration data is highly stable (i.e., the configuration data generally does not change); and the display tool is provided when the train control system has a low confidentiality requirement level or the configuration data needs to be changed frequently.

According to the invention, unchangeable configuration data is set (such as the minimum separation distance between front and rear trains) as a non-visual data file, and the changeable configuration data is set (such as section balise position data) as a visual data file. In this way, protection against unchangeable configuration data can be enhanced on the one hand, and configuration data can be changed in time when a problem occurs to the changeable configuration data on the other hand.

The first data may be stored in a storage unit of the train control system, or may be stored in a storage unit outside the train control system, that is, a data source of the first data may be the train control system itself, may also be a data source external to the train control system.

The data generating unit 12 is capable of generating second data according to the first data and a predetermined decryption algorithm, the second data including at least one data variable.

The predetermined decryption algorithm may be a decryption algorithm corresponding to the encryption algorithm described above. Specifically, as described above, the predetermined decryption algorithm may be an SM4 decryption algorithm or an RSA decryption algorithm. Although the predetermined decryption algorithm is shown above exemplarily, the present disclosure is not limited thereto, those skilled in the art can select an appropriate decryption algorithm as needed, as long as the encryption and decryption principles of the present disclosure can be implemented.

The second data is the RBC configuration data described above, such as line data, time data, and the like. The second data includes at least one data variable. In practice, the RBC control center usually needs large-scale configuration data to realize the operation control over the train, for example, the train operation line is monitored in real time through the line data, the vehicle-ground communication time is adjusted through the time data, and safety separation distance between front and rear trains is ensured through the transportation condition data, and so on. Therefore, the second data should contain one or more data variables, wherein each data variable corresponds to one function or parameter in the RBC control center operating system, and reading and computing of the configuration data can be realized by that the operating system reads each data variable in the second data and assigns a value to the function or parameter, and the corresponding computation result is generated to control the operation of the train. Hereinafter, "the second data" has the same meaning as "RBC configuration data" and "configuration data", unless otherwise specified.

For example, the second data may contain two data variables: a front-rear train minimum interval distance variable and a signal light position variable. The train control system can control the distance between two trains that are front and rear by reading the two data variables to ensure that it is greater than or equal to the front-rear train minimum interval distance.

As another example, the second data may include three data variables: a balise position variable, a vehicle-ground communication timeout time configuration variable, and an interlock route state variable. By reading these three data variables, the train control system can monitor the position of the running train on the one hand, and adjust a vehicle-ground communication timeout threshold in time when the running train is in a specific geographical area (e.g., in a remote mountainous area, resulting in poor communication signals) on the other than, to ensure stable operation of the train and to achieve an interlocking route when conditions are satisfied.

Although the case of the data variable included in the second data is illustrated above exemplarily, the present disclosure is not limited thereto. Those skilled in the art can selectively set the type and number of the data variable in the second data according to actual needs of the train control system, as long as the principles of the present disclosure can be implemented.

The second data is a combination of visual data and non-visual data, that is, the second data, in part, is not visible to the external maintenance personnel. This prevents configuration data from being changed due to mis-operation by the external maintenance personnel.

For example, the second data described above includes two data variables, that is, a front-rear train minimum separation distance variable and a signal light position variable. For example, on the one hand, the front-rear train minimum interval distance variable can be set as non-visual data to prevent from being modified by the maintenance personnel, because a reduction of the front-rear train the minimum interval distance may cause a train collision risk; on the other hand, the signal position variable may be set as visual data, so that after the train line is modified, the maintenance personnel can find and adjust the position of the signal light in time.

The data verifying and operating unit 13 is capable of performing a predetermined verification on the second data and performing a predetermined operation according to a verification result.

Since the first data mentioned above is from an external data source, the second data generated from the first data cannot be directly applied to the train control due to a consideration of safety of the train operation, but the second data is subjected to a predetermined verification, and if the second data passes the predetermined verification, it can be applied to train control.

The predetermined operation differs according to a different result of the predetermined verification. For example, if the second data does not pass the predetermined verification, the predetermined operation may be an error report operation, that is, the train control system reports a configuration data error to the maintenance personnel in a predetermined manner, and waits for the maintenance personnel's further processing.

If the second data does not pass the predetermined verification, the predetermined operation may also be a safe state initiating operation, that is, the train control system initiates a safe state operation to ensure safe operation of the train. For example, in a case where the second data includes a front-rear train minimum interval distance variable, if the front-rear train minimum interval distance variable does not pass the predetermined verification described above (e.g., the front-rear train minimum interval distance variable is too small), the train control system can adjust the front-rear train minimum interval distance variable in time (e.g., appropriately increasing the front-rear train minimum interval distance variable in the second data) to prevent collision during train operation.

Although content of the predetermined operation performed when the second data does not pass the predetermined verification is shown above exemplarily, the present disclosure is not limited thereto, those skilled in the art may selectively set the predetermined operation according to actual needs. For example, in a case where the second data described above includes the front-rear train minimum interval distance variable, the train control system may initiate a safe state operation on the one hand, that is, appropriately increasing the front-rear train minimum interval distance variable, and may also report a configuration data error to the maintenance personnel and wait for further processing by the maintenance personnel on the other hand.

If the second data successfully passes the predetermined verification, the predetermined operation may be assigning a value to the computation function or parameter of the RBC control center according to the second data, and further control the train. In this case, the predetermined operation may also include a reporting operation to the maintenance personnel, such as reporting that configuration data has been updated, configuration data has been applied, and the like.

Further, the predetermined verification may comprises one or more of: validity verification, integrity verification, and cross-comparison verification.

The validity verification may comprise determining whether the at least one data variable satisfies a second predetermined condition. In particular, the second predetermined condition differs depending on the type of the data variable to be verified.

For example, if the data variable to be verified is a fastest travel speed variable, the second predetermined condition may be a travel speed range. For example, the second predetermined condition is that the fastest travel speed of the train is less than or equal to 400 km/hour. If the fastest travel speed variable in the second data is 350 km/hour, the fastest travel speed variable satisfies the second predetermined condition, so the second data can pass the predetermined verification. On the other hand, if the fastest travel speed variable in the second data is 450 km/hour, the fastest travel speed variable does not satisfy the second predetermined condition, thus the second data cannot pass the predetermined verification.

As another example, if the data variable to be verified is a vehicle-ground communication port configuration variable, the second predetermined condition may be a port number. For example, the second predetermined condition is a 16-digit port number that can identify the communication address and the communication protocol. If the vehicle-ground communication port configuration variable in the second data does not match the 16-digit port number, the vehicle-ground communication port configuration variable does not satisfy the second predetermined condition, thus the second data does not pass the predetermined verification.

Although two examples of the validity verification are shown above exemplarily, the present disclosure is not limited thereto. The purpose of the validity verification is to ensure that the second data is valid, which is one of the prerequisites for ensuring that the generated configuration data can be applied and deployed by the train control system.

The integrity verification may include verifying integrity of the second data through a CRC check, a parity check, an MD5 check, or an LRC check.

Specifically, taking the CRC check method as an example, a CRC check code may be added at the end of the generated data frame of the second data (e.g., adding a check code in the last 8 bits of the data frame) to generate a new data frame. The added check code enables the newly generated data frame to be divisible by a specific number selected by a transmission end and a receipt end in common. The train control system divides the data frame by a selected divisor after receiving the new data frame. If there is a remainder, it indicates that the frame has an error during transmission.

Although the CRC check method is shown above exemplarily, the present disclosure is not limited thereto, those skilled in the art may also use other check methods known in the art to verify integrity of the second data, as long as the principles of the present disclosure can be implemented. Through the integrity verification described above, it is advantageous to improve integrity of the second data transmission on the one hand, and when the transmission has an error, it can be found in time on the other hand, which is beneficial to ensure the safety of train operation.

The integrity verification may further include type integrity verification of the data variable of the second data, that is, verifying that the type of the at least one data variable is complete. For example, in order to ensure safe operation of the train, the configuration data should include at least three types of data variables: namely, the front-rear train minimum interval distance variable, the signal light position variable, and the vehicle-ground communication overtime time configuration variable. If the second data contains only one or two of the three types of data variables, the second data does not pass the integrity verification. Therefore, the integrity verification also facilitates in entirety the assurance of various types of data variables required by the train control system, thereby ensuring safe operation of the train.

The train control system further comprises a first computation subsystem and a second computation subsystem, the first computation subsystem and the second computation subsystem perform computation according to the at least one data variable respectively, wherein the cross-comparison verification comprises: judging whether computation results of the first computation subsystem and the second operation computation are consistent.

Specifically, the first computation subsystem and the second computation subsystem may be two computation units in the train control system, respectively. After the train control system reads the second data, it assigns a value to the first computation subsystem and the second computation subsystem respectively, and the two subsystems respectively perform computation, if the computation results of the two are consistent, the result of the computation is outputted. Therefore, by setting the first computation subsystem and the second computation subsystem, it facilitates improving stability and accuracy of the system, thereby ensuring safe operation of the train.

For example, if the second data includes the front-rear train minimum interval distance variable and the track slope variable, the first computation subsystem and the second computation subsystem may respectively compute the fastest speed of the train on the track, if the fastest speeds computed by the two are the same, the computed fastest speed will be outputted to control the running of the train.

Although the example of cross-comparison verification is shown above exemplarily, the present disclosure is not limited thereto, in practice, those skilled in the art may selectively set the scheme of cross-comparison verification as needed, as long as the principles of the present disclosure can be implemented.

Although the example of the predetermined verification is shown above exemplarily, the present disclosure is not limited thereto, those skilled in the art may selectively set the content of the predetermined verification according to actual needs, as long as the principles of the present disclosure can be implemented.

It should be noted that although validity verification, integrity verification, and cross-comparison verification are described above in order, this does not mean that the three verification schemes are to be executed in this order in practice, that is, if the predetermined verification adopts three verification schemes of validity verification, integrity verification and cross-comparison verification, priority order of the three verification schemes may be adjusted according to actual needs. For example, integrity of the configuration data can be verified first, on the basis of satisfying integrity of the confirmation data, validity of the configuration data is verified, and on the basis of satisfying validity of the configuration data, the cross-comparison verification is performed.

It should be noted that the predetermined verification of the second data performed by the data verifying and operating unit 13 should be understood as verification of the at least one data variable in the second data. In practice, in order to improve deployment efficiency of the configuration data, the predetermined verification performed by the data verifying and operating unit 13 may also adopt a verification manner in which multiple verification schemes are parallel. With the second data described above contains two data variables, that is, the front-rear train minimum interval distance variable and the traffic light position variable, as an example, integrity of the two data variables can be verified first, on the basis of that integrity of the two data variables is satisfied, then their validity is verified, it is also possible to first verify integrity and validity of one data variable (such as the front-rear train minimum interval distance variable), and on the basis of that integrity and validity are satisfied, then integrity and validity of another data variable (e.g. traffic light position variable) are verified.

The variable judging and processing unit 14 is capable of judging whether a predetermined variable of the at least one data variable satisfies a first predetermined condition, and performing predetermined processing according to a judgment result.

Even after the predetermined verification described in the above, in some specific cases, the second data cannot be directly applied and deployed. For example, in the at least one data variable of the second data, a certain one (or some) data variable is constant, and change in the configuration data caused by change in the data variable may cause a sudden increase in potential safety risk of the train operation, thus the train control system should perform special inspection and judgment on such data variable.

For example, to prevent collisions of high-speed trains, the minimum interval distance of the front and rear trains is constant, which corresponds to the safe distance that the train brakes to a stable position under the most unfavorable conditions. Therefore, the data variable should generally not be changed. It is assumed that in the train control system, the front-rear train minimum interval distance should be 5000 meters, so the first predetermined condition is that the front-rear train minimum interval distance variable in the second data is greater than or equal to 5000 meters. If the front-rear train minimum interval distance variable in the second data is 3000 meters, the first predetermined condition cannot be satisfied.

Although the first predetermined condition is shown above exemplarily, the present disclosure is not limited thereto, the first predetermined condition may be different according to the type of the data variable judged by the variable judging and processing unit 14. Those skilled in the art may select the first predetermined condition according to actual needs, as long as the principles of the variable judging and processing unit 14 can be implemented.

The predetermined processing may be the predetermined operation performed by the data verifying and operating unit 13 in the above. For example, as described above, if the front-rear train minimum interval distance variable in the second data is less than 5000 meters, the predetermined processing may be a system error report, that is, the train control system reports a configuration data error to the maintenance personnel in a predetermined manner and waits for further processing by the maintenance personnel. The predetermined operation may also be activating a safety state operation, that is, the train control system initiates a safe state operation to ensure safe operation of the train. For example, the train control system may adjust the front-rear train minimum interval distance variable in time (e.g., appropriately increasing the front-rear train minimum interval distance variable in the second data) to prevent collision when trains are running.

If the predetermined variable satisfies the first predetermined condition, the predetermined processing may be value-assigning the predetermined variable to a function or parameter of the RBC control center to control the operation of the train.

Further, the variable judging and processing unit 14 is capable of performing the judging at a predetermined period.

Specifically, the variable judging and processing unit 14 is capable of judging whether the predetermined variable in the at least one data variable satisfies the first predetermined condition at a predetermined period, and performing predetermined processing according to a judgment result.

The predetermined period may be an artificially preset clock cycle, or may be a period calculated by the train control system according to the actual running condition of the train. Those skilled in the art may select the predetermined period according to actual needs, as long as the principles of the present disclosure can be implemented.

Although the example of the predetermined processing is shown above exemplarily, the present disclosure is not limited thereto, those skilled in the art may select the predetermined processing according to the actual situation of the train control system, as long as the principles of the variable judging and processing unit 14 can be implemented.

The train control system 10 described above not only can separate the configuration data from the software logic of the train control system, so that the modification of the configuration data does not involve the change and recompilation of the software logic, but also can ensure the security of the configuration data. In addition, generation of the first data and the second data is performed by a specific tool, which is fast, simple, and reliable. The first data source is a visual file, which enhances readability of the data, and is convenient for the maintenance personnel to quickly check data configuration problems.

It is to be understood that the terminology used in the present specification is for the purpose of describing the particular embodiments, not intended to limit the present disclosure. The singular forms "a", "one", and "said" should be understood as intended to include a plural form unless it is explicitly stated otherwise. The terms "comprise", "include" and any other variations thereof intend to cover nonexclusive inclusion so that the procedure, the method, the product or the equipment including a series of elements include not only these elements, but also other elements which are not listed explicitly, or also include inherent elements of these procedure, method, product or equipment. In a case that there is no further limitation, elements defined by the expressions "comprise one..." do not exclude there being additional identity elements in the procedure, method, product or equipment of the elements.

## Claims

1. A control method applied to a train control system, the control method comprising:
a first data reading step (S101) of reading first data encrypted by a predetermined encryption algorithm;
a second data generating step (S102) of generating second data according to the first data and a predetermined decryption algorithm, the second data including at least one data variable wherein the second data is configuration data of a radio block center;
a data verifying and operating step (S103) of performing a predetermined verification on the second data and performing a predetermined operation according to a verification result; and
a variable judging and processing step (S104) of judging whether a predetermined variable of the at least one data variable satisfies a first predetermined condition, and performing predetermined processing according to a judgment result;
**characterised in that**
the first data is a combination of a visual data file and a non-visual data file, wherein unchangeable configuration data is set as a non-visual data file, and changeable configuration data is set as a visual data file; and wherein:
a specific display tool is to be used to display the non-visual data file; and
the train control system selectively sets a display tool according to needs of a security level to not provide the specific display tool when the train control system has a high confidentiality requirement level and the configuration data is highly stable, and to provide the specific display tool when the train control system has a low confidentiality requirement level or the configuration data needs to be changed frequently.

2. The control method according to claim 1, wherein the predetermined verification comprises one or more of: validity verification, integrity verification, and cross-comparison verification.

3. The control method according to claim 2, wherein the validity verification comprises:
judging whether the at least one data variable satisfies a second predetermined condition.

4. The control method according to any of claims 2 to 3, wherein the integrity verification comprises: verifying integrity of the second data through a CRC check method, a parity check method, an MD5 check method or an LRC check method.

5. The control method according to any of claims 2 to 4, wherein the train control system comprises a first computation subsystem and a second computation subsystem, the first computation subsystem and the second computation subsystem perform computation according to the at least one data variable respectively, wherein the predetermined verification includes the cross-comparison verification comprising: judging whether computation results of the first computation subsystem and the second operation computation are consistent.

6. The control method according to any of claims 1 to 5, wherein the encryption algorithm is a vehicle-ground key encryption algorithm.

7. The control method according to any of the preceding claims, wherein the judging is performed at a predetermined period in the variable judging and processing step.

8. A train control system, wherein the train control system comprises:
a data reading unit (11) capable of reading first data encrypted by a predetermined encryption algorithm;
a data generating unit (12) capable of generating second data according to the first data and a predetermined decryption algorithm, the second data including at least one data variable wherein the second data is configuration data of a radio block center ;
a data verifying and operating unit (13) capable of performing a predetermined verification on the second data and performing a predetermined operation according to a verification result; and
a variable judging and processing unit (14) is capable of judging whether a predetermined variable of the at least one data variable satisfies a first predetermined condition, and performing predetermined processing according to a judgment result;
**characterised in that**
the first data is a combination of a visual data file and a non-visual data file, wherein unchangeable configuration data is set as a non-visual data file, and changeable configuration data is set as a visual data file; and wherein:
a specific display tool is to be used to display the non-visual data file; and
the train control system is configured to selectively set a display tool according to needs of a security level to not provide the specific display tool when the train control system has a high confidentiality requirement level and the configuration data is highly stable; and to provide the specific display tool when the train control system has a low confidentiality requirement level or the configuration data needs to be changed frequently.

9. The train control system according to claim 8, wherein the predetermined verification comprises one or more of: validity verification, integrity verification, and cross-comparison verification.

10. The train control system according to claim 9, wherein the validity verification comprises: judging whether the at least one data variable satisfies a second predetermined condition.

11. The train control system according to claim 9 or claim 10, wherein the integrity verification comprises: verifying integrity of the second data through a CRC check method, a parity check method, an MD5 check method or an LRC check method.

12. The train control system according to any of claims 9 to 11, further comprising a first computation subsystem and a second computation subsystem, the first computation subsystem and the second computation subsystem configured to perform computation according to the at least one data variable respectively, wherein the predetermined verification includes the cross-comparison verification comprising: judging whether computation results of the first computation subsystem and the second operation computation are consistent.

13. The train control system according to any of claims 8 to 12, wherein the encryption algorithm is a vehicle-ground key encryption algorithm.

14. The train control system according to any one of claims 8 to 13, wherein the variable judging and processing unit is capable of performing the judging at a predetermined period.

## Patentansprüche

1. Steuerverfahren zur Anwendung auf ein Zugsteuersystem, wobei das Steuerverfahren Folgendes umfasst:
einen ersten Datenleseschritt (S101) des Lesens erster Daten, die durch einen vorbestimmten Verschlüsselungsalgorithmus verschlüsselt wurden;
einen zweiten Datenerzeugungsschritt (S102) des Erzeugens zweiter Daten gemäß den ersten Daten und einem vorbestimmten Entschlüsselungsalgorithmus, wobei die zweiten Daten mindestens eine Datenvariable beinhalten, wobei es sich bei den zweiten Daten um Konfigurationsdaten eines Radio Block Centers handelt;
einen Datenverifizierungs- und -operationsschritt (S103) des Durchführens einer vorbestimmten Verifizierung an den zweiten Daten und des Durchführens einer vorbestimmten Operation gemäß einem Verifizierungsergebnis; und
einen Variablenbeurteilungs- und -verarbeitungsschritt (S104) des Beurteilens, ob eine vorbestimmte Variable der mindestens einen Datenvariable eine erste vorbestimmte Bedingung erfüllt, und des Durchführens einer vorbestimmten Verarbeitung gemäß einem Beurteilungsergebnis;
**dadurch gekennzeichnet, dass** es sich bei den ersten Daten um eine Kombination aus einer visuelle Daten-Datei und einer nicht visuelle Daten-Datei handelt, wobei unveränderbare Konfigurationsdaten als eine nicht visuelle Daten-Datei angelegt werden und veränderbare Konfigurationsdaten als eine visuelle Daten-Datei angelegt werden, und wobei:
ein spezielles Anzeigetool verwendet werden muss, um die nicht visuelle Daten-Datei anzuzeigen; und
das Zugsteuersystem ein Anzeigetool selektiv festlegt abhängig von Anforderungen einer Sicherheitsstufe, das spezielle Anzeigetool nicht bereitzustellen, wenn das Zugsteuersystem eine hohe Vertraulichkeitsanforderungsstufe aufweist und die Konfigurationsdaten äußerst stabil sind, und das spezielle Anzeigetool bereitzustellen, wenn das Zugsteuersystem eine niedrige Vertraulichkeitsanforderungsstufe aufweist oder die Konfigurationsdaten häufig geändert werden müssen.

2. Steuerverfahren nach Anspruch 1, wobei die vorbestimmte Verifizierung eines oder mehrere umfasst von: Gültigkeitsverifizierung, Integritätsverifizierung und Quervergleichsverifizierung.

3. Steuerverfahren nach Anspruch 2, wobei die Gültigkeitsverifizierung Folgendes umfasst:
Beurteilen, ob die mindestens eine Datenvariable eine zweite vorbestimmte Bedingung erfüllt.

4. Steuerverfahren nach einem der Ansprüche 2 bis 3, wobei die Integritätsverifizierung Folgendes umfasst: Verifizieren der Integrität der zweiten Daten durch ein CRC-Prüfverfahren, ein Paritätsprüfverfahren, ein MD₅-Prüfverfahren oder ein LRC-Prüfverfahren.

5. Steuerverfahren nach einem der Ansprüche 2 bis 4, wobei das Zugsteuersystem ein erstes Berechnungsteilsystem und ein zweites Berechnungsteilsystem umfasst, wobei das erste Berechnungsteilsystem und das zweite Berechnungsteilsystem jeweils eine Berechnung gemäß der mindestens einen Datenvariable durchführen, wobei die vorbestimmte Verifizierung die Quervergleichsverifizierung beinhaltet, die Folgendes umfasst: Beurteilen, ob Berechnungsergebnisse des ersten Berechnungsteilsystems und die zweite Operationsberechnung konsistent sind.

6. Steuerverfahren nach einem der Ansprüche 1 bis 5, wobei der Verschlüsselungsalgorithmus ein Fahrzeug-Erde-Schlüsselverschlüsselungsalgorithmus ist.

7. Steuerverfahren nach einem der vorhergehenden Ansprüche, wobei das Beurteilen in einem vorbestimmten Zeitabschnitt in dem Variablenbeurteilungs- und -verarbeitungsschritt durchgeführt wird.

8. Zugsteuersystem, wobei das Zugsteuersystem Folgendes umfasst:
eine Datenleseeinheit (11), die in der Lage ist, erste Daten zu lesen, die durch einen vorbestimmten Verschlüsselungsalgorithmus verschlüsselt wurden;
eine Datenerzeugungseinheit (12), die in der Lage ist, zweite Daten gemäß den ersten Daten und einem vorbestimmten Entschlüsselungsalgorithmus zu erzeugen, wobei die zweiten Daten mindestens eine Datenvariable beinhalten, wobei es sich bei den zweiten Daten um Konfigurationsdaten eines Radio Block Centers handelt;
eine Datenverifizierungs- und -operationseinheit (13), die in der Lage ist, eine vorbestimmte Verifizierung an den zweiten Daten durchzuführen und eine vorbestimmte Operation gemäß einem Verifizierungsergebnis durchzuführen; und
eine Variablenbeurteilungs- und -verarbeitungseinheit (14), die in der Lage ist, zu beurteilen, ob eine vorbestimmte Variable der mindestens einen Datenvariable eine erste vorbestimmte Bedingung erfüllt, und eine vorbestimmte Verarbeitung gemäß einem Beurteilungsergebnis durchzuführen;
**dadurch gekennzeichnet, dass** es sich bei den ersten Daten um eine Kombination aus einer visuelle Daten-Datei und einer nicht visuelle Daten-Datei handelt, wobei unveränderbare Konfigurationsdaten als eine nicht visuelle Daten-Datei angelegt werden und veränderbare Konfigurationsdaten als eine visuelle Daten-Datei angelegt werden, und wobei:
ein spezielles Anzeigetool verwendet werden muss, um die nicht visuelle Daten-Datei anzuzeigen; und
das Zugsteuersystem konfiguriert ist, gemäß Anforderungen einer Sicherheitsstufe, das spezielle Anzeigetool nicht bereitzustellen, wenn das Zugsteuersystem eine hohe Vertraulichkeitsanforderungsstufe aufweist und die Konfigurationsdaten äußerst stabil sind; und das spezielle Anzeigetool bereitzustellen, wenn das Zugsteuersystem eine niedrige Vertraulichkeitsanforderungsstufe aufweist oder die Konfigurationsdaten häufig geändert werden müssen, selektiv ein Anzeigetool festzulegen.

9. Zugsteuersystem nach Anspruch 8, wobei die vorbestimmte Verifizierung eines oder mehrere umfasst von Gültigkeitsverifizierung, Integritätsverifizierung und Quervergleichsverifizierung.

10. Zugsteuersystem nach Anspruch 9, wobei die Gültigkeitsverifizierung Folgendes umfasst: Beurteilen, ob die mindestens eine Datenvariable eine zweite vorbestimmte Bedingung erfüllt.

11. Zugsteuersystem nach Anspruch 9 oder 10, wobei die Integritätsverifizierung Folgendes umfasst: Verifizieren der Integrität der zweiten Daten durch ein CRC-Prüfverfahren, ein Paritätsprüfverfahren, ein MD₅-Prüfverfahren oder ein LRC-Prüfverfahren.

12. Zugsteuersystem nach einem der Ansprüche 9 bis 11, das ferner ein erstes Berechnungsteilsystem und ein zweites Berechnungsteilsystem umfasst, wobei das erste Berechnungsteilsystem und das zweite Berechnungsteilsystem konfiguriert sind, jeweils eine Berechnung gemäß der mindestens einen Datenvariable durchführen, wobei die vorbestimmte Verifizierung die Quervergleichsverifizierung beinhaltet, die Folgendes umfasst: Beurteilen, ob Berechnungsergebnisse des ersten Berechnungsteilsystems und die zweite Operationsberechnung übereinstimmend sind.

13. Zugsteuersystem nach einem der Ansprüche 8 bis 12, wobei der Verschlüsselungsalgorithmus ein Fahrzeug-Erde-Schlüsselverschlüsselungsalgorithmus ist.

14. Zugsteuersystem nach einem der Ansprüche 8 bis 13, wobei die Variablenbeurteilungs- und -verarbeitungseinheit in der Lage ist, das Beurteilen in einem vorbestimmten Zeitabschnitt durchzuführen.

## Revendications

1. Procédé de commande appliqué à un système de commande de train, le procédé de commande comprenant :
une première étape de lecture de données (S101) consistant à lire des premières données chiffrées par un algorithme de chiffrement prédéterminé ;
une seconde étape de génération de données (S102) consistant à générer des secondes données selon les premières données et selon un algorithme de déchiffrement prédéterminé, les secondes données incluant au moins une variable de données, dans lesquelles les secondes données sont des données de configuration d'un centre de bloc radio ;
une étape de vérification et d'exploitation de données (S103) consistant à mettre en oeuvre une vérification prédéterminée sur les secondes données et à mettre en oeuvre une opération prédéterminée selon un résultat de vérification ; et
une étape de jugement et de traitement de variable (S104) consistant à juger si une variable prédéterminée de ladite au moins une variable de données satisfait une première condition prédéterminée, et à mettre en oeuvre un traitement prédéterminé selon un résultat de jugement ;
**caractérisé en ce que** les premières données sont une combinaison d'un fichier de données visuelles et d'un fichier de données non visuelles, dans lesquelles des données de configuration non modifiables sont définies en tant qu'un fichier de données non visuelles, et des données de configuration modifiables sont définies en tant qu'un fichier de données visuelles ; et dans lequel :
un outil d'affichage spécifique doit être utilisé pour afficher le fichier de données non visuelles ; et
le système de commande de train définit sélectivement un outil d'affichage selon des besoins d'un niveau de sécurité, afin de ne pas fournir l'outil d'affichage spécifique lorsque le système de commande de train présente un niveau d'exigence de confidentialité élevé et que les données de configuration sont très stables, et de fournir l'outil d'affichage spécifique lorsque le système de commande de train présente un niveau d'exigence de confidentialité faible ou que les données de configuration doivent être modifiées fréquemment.

2. Procédé de commande selon la revendication 1, dans lequel la vérification prédéterminée comprend une ou plusieurs des vérifications parmi : une vérification de validité, une vérification d'intégrité et une vérification par comparaison croisée.

3. Procédé de commande selon la revendication 2, dans lequel la vérification de validité comprend l'étape ci-dessous consistant à :
juger si ladite au moins une variable de données satisfait une seconde condition prédéterminée.

4. Procédé de commande selon l'une quelconque des revendications 2 à 3, dans lequel la vérification d'intégrité comprend l'étape ci-après consistant à : vérifier une intégrité des secondes données au moyen d'un procédé de contrôle CRC, d'un procédé de contrôle de parité, d'un procédé de contrôle MD5 ou d'un procédé de contrôle LRC.

5. Procédé de commande selon l'une quelconque des revendications 2 à 4, dans lequel le système de commande de train comprend un premier sous-système de calcul et un second sous-système de calcul, dans lequel le premier sous-système de calcul et le second sous-système de calcul mettent en oeuvre un calcul selon ladite au moins une variable de données, respectivement, dans lequel la vérification prédéterminée inclut une vérification par comparaison croisée comprenant l'étape ci-après consistant à : juger si des résultats de calcul du premier sous-système de calcul et du second sous-système de calcul sont cohérents.

6. Procédé de commande selon l'une quelconque des revendications 1 à 5, dans lequel l'algorithme de chiffrement est un algorithme de chiffrement de clé de véhicule-terrestre.

7. Procédé de commande selon l'une quelconque des revendications précédentes, dans lequel l'étape de jugement est mise en oeuvre au cours d'une période prédéterminée dans l'étape de jugement et de traitement de variable.

8. Système de commande de train, dans lequel le système de commande de train comprend :
une unité de lecture de données (11) en mesure de lire des premières données chiffrées par un algorithme de chiffrement prédéterminé ;
une unité de génération de données (12) en mesure de générer des secondes données selon les premières données et selon un algorithme de déchiffrement prédéterminé, les secondes données incluant au moins une variable de données, dans lesquelles les secondes données sont des données de configuration d'un centre de bloc radio ;
une unité de vérification et d'exploitation de données (13) en mesure de mettre en oeuvre une vérification prédéterminée sur les secondes données et de mettre en oeuvre une opération prédéterminée selon un résultat de vérification ; et
une unité de jugement et de traitement de variable (14) en mesure de juger si une variable prédéterminée de ladite au moins une variable de données satisfait une première condition prédéterminée, et de mettre en oeuvre un traitement prédéterminé selon un résultat de jugement ;
**caractérisé en ce que** les premières données sont une combinaison d'un fichier de données visuelles et d'un fichier de données non visuelles, dans lesquelles des données de configuration non modifiables sont définies en tant qu'un fichier de données non visuelles, et des données de configuration modifiables sont définies en tant qu'un fichier de données visuelles ; et dans lequel :
un outil d'affichage spécifique doit être utilisé pour afficher le fichier de données non visuelles ; et
le système de commande de train est configuré de manière à définir sélectivement un outil d'affichage selon des besoins d'un niveau de sécurité, afin de ne pas fournir l'outil d'affichage spécifique lorsque le système de commande de train présente un niveau d'exigence de confidentialité élevé et que les données de configuration sont très stables, et de fournir l'outil d'affichage spécifique lorsque le système de commande de train présente un niveau d'exigence de confidentialité faible ou que les données de configuration doivent être modifiées fréquemment.

9. Système de commande de train selon la revendication 8, dans lequel la vérification prédéterminée comprend une ou plusieurs des vérifications parmi : une vérification de validité, une vérification d'intégrité et une vérification par comparaison croisée.

10. Système de commande de train selon la revendication 9, dans lequel la vérification de validité comprend l'étape ci-dessous consistant à : juger si ladite au moins une variable de données satisfait une seconde condition prédéterminée.

11. Système de commande de train selon la revendication 9 ou 10, dans lequel la vérification d'intégrité comprend l'étape ci-après consistant à : vérifier une intégrité des secondes données au moyen d'un procédé de contrôle CRC, d'un procédé de contrôle de parité, d'un procédé de contrôle MD5 ou d'un procédé de contrôle LRC.

12. Système de commande de train selon l'une quelconque des revendications 9 à 11, comprenant en outre un premier sous-système de calcul et un second sous-système de calcul, dans lequel le premier sous-système de calcul et le second sous-système de calcul sont configurés de manière à mettre en oeuvre un calcul selon ladite au moins une variable de données, respectivement, dans lequel la vérification prédéterminée inclut la vérification par comparaison croisée comprenant l'étape ci-après consistant à : juger si des résultats de calcul du premier sous-système de calcul et du second sous-système de calcul sont cohérents.

13. Système de commande de train selon l'une quelconque des revendications 8 à 12, dans lequel l'algorithme de chiffrement est un algorithme de chiffrement de clé de véhicule-terrestre.

14. Système de commande de train selon l'une quelconque des revendications 8 à 13, dans lequel l'unité de jugement et de traitement de variable est en mesure de mettre en oeuvre l'étape de jugement au cours d'une période prédéterminée.
